Europäisches Patentamt

(19) European Patent Office

Office européen des brevets

(11) Numéro de publication: **0 005 679**
**B1**

(12) **FASCICULE DE BREVET EUROPEEN**

(45) Date de publication du fascicule du brevet:
08.09.82

(21) Numéro de dépôt: **79420023.8**

(22) Date de dépôt: **10.05.79**

(51) Int. Cl.³: **C 01 F 7/26,** C 01 F 7/20

(54) **Procédé continu d'obtention d'alumine pure à partir d'une liqueur acide provenant de l'attaque chlorosulfurique d'un minerai alumineux et de purification de la liqueur débarrassée de l'alumine.**

(30) Priorité: **18.05.78 FR 7815370**

(43) Date de publication de la demande:
**28.11.79 Bulletin 79/24**

(45) Mention de la délivrance du brevet:
**08.09.82 Bulletin 82/36**

(84) Etats contractants désignés:
**DE GB NL**

(56) Documents cités:
**DE-A-2 807 850**
**DE-A-2 807 862**
**FR-A-1 541 467**
**FR-A-1 558 347**
**FR-A-2 338 898**
**FR-A-2 360 515**
**GB-A-982 098**
**GB-A-1 104 088**

(73) Titulaire: **ALUMINIUM PECHINEY, 28, rue de Bonnel,
F-69433 Lyon Cedex 3 (FR)**

(72) Inventeur: **Cohen, Joseph, 17 Chemin des Gardes,
F-13100 Aix-en-Provence (FR)**
Inventeur: **Adjemian, Alain Résidence Sainte-Victoire,
Bâtiment A 68 Avenue Saint-Jérôme,
F-13100 Aix-en-Provence (FR)**
Inventeur: **Ferran, Michel, 2 Avenue Saint-Jérôme,
F-13100 Aix-en-Provence (FR)**

(74) Mandataire: **Gaucherand, Michel et al, PECHINEY
UGINE KUHLMANN 28 rue de Bonnel, F-69433 Lyon
Cedex 3 (FR)**

ACTORUM AG

## Procédé continu d'obtention d'alumine pure à partir d'une liqueur acide provenant de l'attaque chlorosulfurique d'un minerai alumineux et de purification de la liqueur débarrassée de l'alumine.

L'invention concerne un nouveau procédé d'obtention d'alumine pure comprenant en combinaison nouvelle l'attaque chlorosulfurique de minerais alumineux contenant des impuretés, suivie d'une concentration de la liqueur obtenue après attaque et séparation des stériles, le traitement sulfurique de la liqueur concentrée, puis sa chloruration provoquant la précipitation de la quasi-totalité du chlorure d'aluminium hexahydraté, la séparation du précipité de chlorure d'aluminium hexahydraté et de la liqueur-mère chlorosulfurique chargée en impuretés, la pyrohydrolyse du précipité donnant l'alumine pur recherchée avec recyclage de l'acide chlorhydrique, le dégazage de la liqueur chlorosulfurique d'impuretés avec recyclage de l'HCl gazeux en chloruration et l'obtention d'une liqueur sulfurique d'impuretés, enfin l'élimination des impuretés présentes dans cette dernière liqueur sous la forme d'un précipitation sulfurique par concentration.

On a déjà proposé, et ce depuis longtemps, l'attaque chlorhydrique de minerais alumineux pour en extraire l'alumine. Si ces procédés présentent entre eux le trait commun de l'attaque chlorhydrique, ils apparaissent très différents sur les moyens mis en œuvre pour éliminer les impuretés provenant du minerai.

C'est ainsi que le brevet britannique no 982 098 a proposé l'attaque d'un minerai argileux calciné par une solution chlorhydrique à 20% puis, après séparation de la fraction stérile constituée par de la silice, à extraire les impuretés présentes dans la liqueur séparée, par échange d'ions, soit sur une résine solide, soit par un solvant organique. La précipitation du chlorure d'aluminium hexahydraté était alors obtenue par évaporation de la liqueur purifiée.

Ce procédé bien qu'intéressant, offrait malgré tout, l'inconvénient de nécessiter une régénération de la résine exigeant de très grands volumes de liqueurs qu'il faut ensuite traiter avant leur rejet, consommant ainsi une grande quantité d'énergie.

Un autre document, plus récent, le brevet britannique no 1 104 088, a également décrit l'attaque chlorhydrique de minerais alumineux, la cristallisation du chlorure d'aluminium hexahydraté, en opérant cette cristallisation en plusieurs étapes, la première donnant, par exemple, le chlorure d'aluminium hexahydraté pur, tandis que les autres fournissaient le chlorure d'aluminium hydraté impur. L'élimination des impuretés présentes dans le minerai d'origine, et que l'on retrouvait en solution dans la liqueur après attaque, s'effectuait sur un prélèvement de la liqueur-mère, provenant de la dernière cristallisation du chlorure d'aluminium hexahydraté, par évaporation et cristallisation.

Malgré tout l'intérêt qu'un tel procédé pouvait présenter à l'homme de l'art, il est apparu des inconvénients à son usage, dont deux sont véritablement importants:

– le prélèvement de la liqueur-mère provenant de la dernière cristallisation du chlorure d'aluminium représentait un volume conséquent et, par là-même, une quantité importante d'énergie pour provoquer la cristallisation des impuretés par évaporation de l'eau;

– outre ce fait, cette liqueur prélevée après la dernière cristallisation était riche en alumine avec un taux supérieur à 13%, entraînant des pertes inacceptables en cette matière.

Enfin, un procédé beaucoup plus récent a été proposé et décrit dans le brevet français no 1 541 467.

Après une attaque chlorhydrique du minerai alumineux, puis la cristallisation, en au moins deux étapes, du chlorure d'aluminium hexahydraté par évaporation d'eau, le calcium, présent en solution dans la liqueur-mère obtenue après la première cristallisation du chlorure d'aluminium hexahydraté, était précipité sous forme de sulfate de calcium, séparé de ladite liqueur par l'addition d'une quantité stoéchiométrique d'acide sulfurique, tandis que le fer était extrait au moyen d'un solvant organique sélectif ou d'un séquestrant. Le procédé manifestait également des inconvénients tels qu'une perte de solvant avec des liqueurs aqueuses, ainsi que la nécessité de purger les impuretés non éliminées par le solvant, impliquant une perte de chlorure d'aluminium hydraté.

Bien que ces procédés cycliques offrent de nombreux avantages, force était de constater que leur application ne pouvait être suffisamment générale dans la conjoncture économique actuelle, tant par les importantes consommations d'énergie qu'ils sollicitent, que par des rejets d'effluents dans les voies naturelles, qui sont de plus en plus prohibés.

La demanderesse, poursuivant ses recherches en ce domaine, a tenté de mettre au point un procédé d'attaque chlorosulfurique de minerais alumineux qu'elle a combiné avec une épuration efficace de la liqueur-mère obtenue après la précipitation et la séparation du chlorure d'aluminium hexahydraté, l'épuration étant effectuée sur la totalité de la liqueur recueillie.

Le procédé d'obtention d'une alumine pure selon l'invention, à partir d'un minerai alumineux calciné contenant des impuretés, comporte l'attaque acide et à chaud dudit minerai, la séparation du résidu d'attaque et de la liqueur-mère après attaque, le lavage du résidu d'attaque, la concentration de la liqueur-mère après attaque, la précipitation de $AlCl_3, 6H_2O$ par chloruration de la liqueur-mère concentrée, la calcination du chlorure d'aluminium hydraté et le recyclage des effluents, et se caractérise en ce que l'attaque du minerai se fait au moyen d'une liqueur chlorosulfurique de recyclage contenant en majeure partie de l'HCl et en mineure partie $H_2SO_4$, en ce que la liqueur-mère provenant de l'attaque est concentrée jusqu'à la limite de solubilité du chlorure d'aluminium hexahydraté, en ce que la liqueur-mère chlorosulfurique concentrée est mélangée à une liqueur sulfurique de recyclage, puis soumise à une chloruration par introduction d'HCl gazeux recyclé, en vue de précipiter la quasi-totalité de $AlCl_3, 6H_2O$, en ce que, après séparation du précipité, la liqueur chorusulfurique contenant les impuretés est dégazée pour recycler HCl gaz à la précipitation de $AlCl_3, 6H_2O$ et récupérer une liqueur sulfurique d'impuretés, en ce que du potassium, éventuellement recyclé, est introduit dans la liqueur sulfurique d'impuretés en vue de précipiter par concentration de ladite liqueur le sulfate ferri-potassique et les autres sulfates d'impuretés correspondant à la quantité des impuretés provenant du minerai et à recycler la liqueur sulfurique débarrassée des impuretés vers la liqueur-mère chlorosulfurique provenant de l'attaque.

Dans ces caractéristiques, le procédé selon l'invention comprend les phases suivantes dont certaines sont essentielles et d'autres éventuelles:

a) l'attaque d'un minerai alumineux contenant également d'autres constituants tels que le fer, le titane, le calcium, etc... par une solution aqueuse chlorosulfurique recyclée, contenant plus d'HCl que de $H_2SO_4$, la quantité d'HCl étant inférieure à 50% en poids et pouvant également contenir entre 1% et 3% de chlorure d'aluminium et divers métaux formant les impuretés encore présentes dans ladite liqueur, ladite attaque pouvant conduire à l'obtention d'une solution riche en chlorure d'aluminium dissous, pouvant atteindre une concentration de 8–9% d'$Al_2O_3$ en poids;

b) la séparation d'un résidu d'attaque imprégné et d'une liqueur chlorosulfurique;

c) le traitement de ce résidu d'attaque pour en extraire la liqueur d'imprégnation au moyen d'une quantité adéquate d'eau de lavage pour obtenir des inertes qui sont éliminées et une solution aqueuse recyclée à l'attaque;

d) la concentration de la liqueur chlorosulfurique contenant l'alumine et les impuretés solubles jusqu'à la limite de solubilité du chlorure d'aluminium hexahydraté dans le milieu;

e) la reprise sulfurique de la liqueur chlorosulfurique sortant de l'évaporation;

f) la chloruration de la liqueur chlorosulfurique par du gaz chlorhydrique jusqu'à la précipitation du chlorure d'aluminium hexahydraté répondant à la formule $AlCl_3, 6H_2O$;

g) la séparation de cette fraction cristallisée de chlorure d'aluminium hydraté imprégné d'eaux-mères, et d'une liqueur chlorosulfurique contenant en solution la quasi totalité des impuretés;

h) le lavage des cristaux de chlorure d'aluminium hydraté par une liqueur chlorhydrique;

i) le recyclage à l'attaque du minerai de la liqueur chlorosulfurique provenant du lavage du chlorure d'aluminium hydraté;

j) la décomposition thermique du chlorure d'aluminium hydraté donnant l'alumine pure et l'absorption des effluents gazeux chlorhydriques et les vapeurs d'eau pour constituer la liqueur de lavage précitée;

k) le dégazage de la liqueur chlorosulfurique d'impuretés avec recyclage de l'HCl gazeux à la chloruration précitée;

l) l'introduction éventuelle de potassium sous forme saline;

m) la concentration de la liqueur-mère sulfurique avec départ des dernières traces d'HCl gazeux jusqu'à la précipitation des sulfates d'impuretés correspondant aux quantités d'impuretés provenant de l'attaque du minerai et du sel de potassium éventuellement introduit;

n) enfin, la séparation des cristaux de sulfates d'impuretés et de la liqueur sulfurique qui est recyclée dans la liqueur d'attaque chlorosulfurique contenant l'alumine et les impuretés, avant d'en effectuer la chloruration.

La solution d'attaque des minerais alumineux est constituée par des solutions aqueuses recyclées contenant de l'acide chlorhydrique et de l'acide sulfurique, dont la teneur peut être ajustée par un appoint d'HCl et de $H_2SO_4$ neufs en un point quelconque du cycle, pour compenser les pertes ainsi qu'un appoint d'eau, qui peut être constitué par l'eau de lavage des inertes, pour obtenir une liqueur d'attaque, par exemple, à 20% en poids d'HCl environ et 5% en poids de $H_2SO_4$ environ. La présence de $H_2SO_4$, même en faible quantité, améliore très sensiblement la cinétique d'attaque sans provoquer le dégagement de HCl.

L'attaque du minerai alumineux s'effectue à chaud, à une température proche de celle de l'ébullition, généralement à la pression atmosphérique, et pendant un temps qui peut varier de ½ heure à 5 heures. Après l'attaque chlorosulfurique du minerai, le produit de l'attaque comportant une phase solide constituée par des inertes et une phase liquide dans laquelle sont dissous les chlorures d'aluminium et les impuretés solides, est soumis à une séparation.

Le résidu d'attaque, formant la phase solide, est alors lavé par une quantité d'eau appropriée, la liqueur, après rinçage des inertes, étant recyclée à l'attaque du minerai.

La liqueur résultant de l'attaque chlorosulfurique du minerai alumineux est soumise à une concentration par évaporation jusqu'à la limite de solubilité du chlorure d'aluminium hexahydraté dans le milieu. Puis, la liqueur chlorosulfurique provenant de l'évaporation est soumise à une reprise sulfurique par introduction d'une liqueur sulfurique de recyclage contenant de 40 à 65% en poids de $H_2SO_4$ libre, cette introduction permettant de faciliter la chloruration ultérieure en vue de la précipitation du chlorure d'aluminium hydraté, introduction sans laquelle une très grande quantité d'HCl gazeux serait nécessaire. Dès lors, la chloruration de la liqueur chlorosulfurique s'effectue par l'introduction de HCl gazeux de recyclage jusqu'à précipitation sous forme de chlorure d'aluminium hexahydraté de la quasi-totalité de l'alumine présente dans la liqueur chlorosulfurique que l'on sépare de sa liqueur-mère chlorosulfurique contenant les impuretés.

Les cristaux de chlorure d'aluminium hydraté ainsi obtenus, sont lavés avec une liqueur de recyclage chlorhydrique afin d'éliminer la liqueur d'imprégnation chlorosulfurique, ainsi que les impuretés présentes en solution.

La liqueur chlorhydrique, par lavage du chlorure d'aluminium hexahydraté, entraîne les impuretés imprégnant le précipité, tout en dissolvant une faible fraction d'alumine qui est de l'ordre de 2 à 5% en poids. Cette liqueur, après lavage, est recyclée en tête du procédé et constitue la liqueur d'attaque du minerai alumineux.

Les cristaux de chlorure d'aluminium hexahydraté sont ensuite calcinés selon un procédé connu en donnant l'alumine pure souhaitée et une phase gazeuse constituée par de l'HCl et de la vapeur d'eau qui, une fois absorbée, constitue la liqueur riche en HCl destinée au lavage desdits cristaux.

La liqueur chlorosulfurique, séparée des cristaux de chlorure d'aluminium hexahydraté, contient l'essentiel des impuretés constituées par du fer, du titane, du sodium, du potassium, du magnésium, du calcium etc... ainsi qu'une très faible fraction d'alumine. Elle est additionnée, si besoin est, d'un complément d'acide chlorhydrique et d'acide sulfurique compensant les pertes produites dans l'ensemble du cycle.

La liqueur chlorosulfurique est alors dégazée par chauffage, permettant de recueillir l'acide chlorhydrique gazeux destiné à la chloruration et à la précipitation du chlorure d'aluminium hexahydraté. Au-delà de cette opération de dégazage, ladite liqueur est additionnée de potassium sous la forme d'alun recyclé ou de sulfate de potassium.

La liqueur sulfurique est alors soumise à une concentration par évaporation jusqu'à la précipitation des impuretés, provenant de l'attaque du minerai sous la forme de sulfates, et du sulfate de potassium provenant de l'alun. Les sels précipités sont essentiellement constitués de sulfates ferri-potassique, titanopotassique, sulfate de calcium etc...

Après séparation, la liqueur sulfurique, débarrassée de la quasi-totalité des impuretés, est recyclée, tandis que le résidu solide peut être traité de manières diverses pour recueillir, par exemple, le potassium et/ou d'autres constituants, et est éventuellement calciné pour valoriser le $SO_2$ par sa transformation en $H_2SO_4$ et sa réintroduction dans le circuit.

Le procédé selon l'invention est un procédé cyclique qui permet d'isoler une alumine pure et un mélange de sels d'impuretés se présentant sous la forme de sulfates simples et/ou doubles.

Les consommations en réactif sont faibles et ne concernent que le remplacement des pertes en acides chlorhydrique et sulfurique. Le procédé selon l'invention est applicable au traitement des matières alumineuses naturelles ou artificielles contenant des impuretés: parmi ces matières, peuvent être cités les minerais silico-alumineux, comme les kaolins, les bauxites siliceuses, les argiles koaliniques, les schistes houillers ou non, ou encore des alumines impures provenant de procédés autres.

L'invention sera mieux comprise grâce au schéma annexé à la présente description.

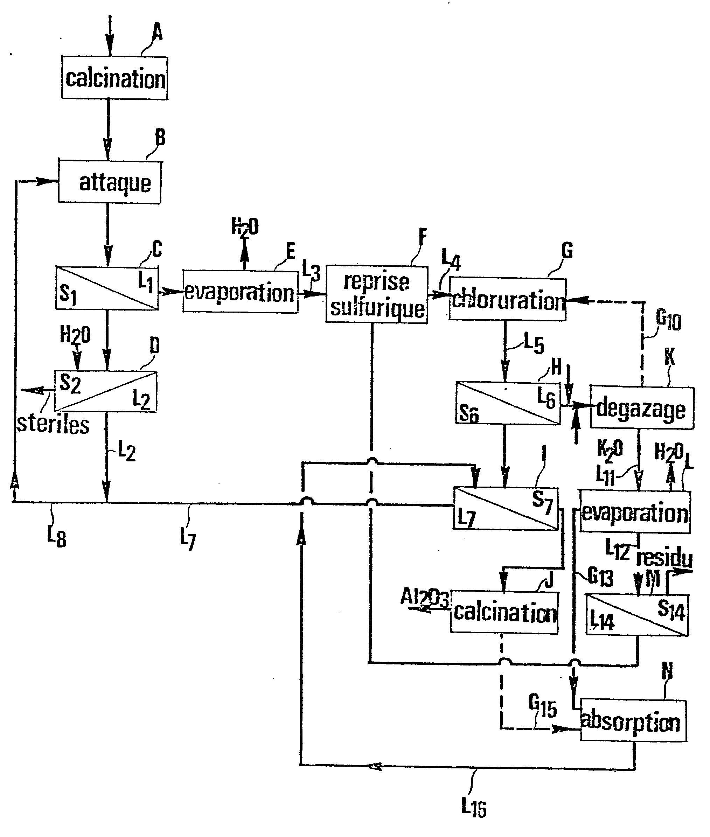

Selon la figure, le minerai alumineux cru est placé en (A) où il subit une calcination. Puis, ce minerai calciné et la liqueur chlorosulfurique d'attaque $L_8$ recyclée, sont introduits dans le réacteur d'attaque (B). La bouillie, obtenue après attaque, est conduite de (B) en (C) où s'effectue la séparation d'un résidu d'attaque $S_1$ et d'une liqueur chlorosulfurique $L_1$ contenant l'alumine et les impuretés solubilisées. Les eaux-mères d'imprégnation du gâteau $S_1$ sont alors extraites en (D) au moyen d'une quantité adéquate d'eau et la liqueur $L_2$ en résultant est mélangée à la liqueur $L_7$, liqueur de lavage des cristaux de chlorure d'aluminium hydraté, avant son introduction à l'attaque.

Le gâteau $S_2$ est alors isolé: il est essentiellement constitué par de la silice.

La liqueur $L_1$ obtenue après attaque du minerai et séparation des stériles est alors introduite en (E) où s'effectue une concentration par évaporation jusqu'à la limite de solubilité du chlorure d'aluminium, dans le milieu.

La liqueur $L_3$ provenant de (E) est conduite en (F) où s'effectue une reprise sulfurique de cette liqueur par la liqueur $L_{14}$.

A la sortie de (F), la liqueur chlorosulfurique $L_4$ est introduite en (G) où elle est saturée en HCl par l'introduction de la fraction gazeuse $G_{10}$ d'HCl de recyclage, provoquant la précipitation de l'alumine présente par formation de chlorure d'aluminium hexahydraté.

La fraction $L_5$ provenant de (G), est, en fait, une bouillie constituée par une phase solide et une phase liquide dont on réalise la séparation en (H) en une fraction solide $S_6$ de chlorure d'aluminium hexahydraté et une liqueur $L_6$ contenant l'essentiel des impuretés constituées par du fer, du titane, du sodium, du potassium, du magnésium, du calcium etc...

Les cristaux $S_6$ de chlorure d'aluminium hydraté sont ensuite introduits en (I) où s'effectue un rinçage par une liqueur chlorhydrique $L_{16}$ de recy-

clage. On obtient ainsi des cristaux purs $S_7$ de $AlCl_3$, $6H_2O$ dépouillés de la liqueur-mère chlorhydrique $L_6$, tandis que cette dernière, entraînée par $L_{16}$, constitue une nouvelle liqueur chlorhydrique $L_7$ pratiquement exempte d'impuretés, qui est ultérieurement jointe à la liqueur $L_2$ provenant du lavage des inertes, pour former la liqueur d'attaque $L_8$.

Les cristaux purs $S_7$ imprégnés de la liqueur de rinçage, sont ensuite calcinés en (J), en livrant une alumine pure et un mélange gazeux $G_{15}$ comprenant du gaz HCl et de la vapeur d'eau absorbée en (N).

Comme cela a déjà été dit, la liqueur $L_6$ chlorosulfurique, provenant de la séparation (H), contient en solution l'essentiel des impuretés initialement présentes dans le minerai. Cette liqueur $L_6$ est alors introduite en (K) où elle subit un dégazage en donnant une liqueur pratiquement sulfurique $L_{11}$ contenant les impuretés et de l'HCl gazeux $G_{10}$ qui est recyclé en (I).

La liqueur $L_{11}$ à laquelle est adjointe une quantité adéquate de potassium sous la forme d'un sel double par exemple, est déplacée ensuite en (L) où se produit une concentration par évaporation d'eau et élimination des dernières traces de HCl constituant la fraction gazeuse $G_{13}$ envoyée à l'absorption (N).

La fraction $L_{12}$ sortant de (L) se présente sous l'aspect d'une bouillie comportant une phase solide constituée par les sulfates complexes précipités lors de l'évaporation en (L) et une phase liquide qui est une liqueur sulfurique.

Les deux phases sont alors séparées en (M) en un gâteau $S_{14}$, mélange de sulfates complexes de fer, de titane etc. ..., qui peut être ultérieurement valorisé, et une liqueur $L_{14}$ qui est renvoyée en (F) pour y effectuer la reprise sulfurique de la liqueur chlorosulfurique provenant de l'attaque du minerai alumineux.

Exemple:
On a traité selon le procédé de l'invention, un kaolin calciné ayant la composition suivante en poids:

| | |
|---|---|
| $Al_2O_3$ | 42,08% |
| $Fe_2O_3$ | 1,37% |
| $TiO_2$ | 2,37% |
| $Na_2O$ | 0,08% |
| $K_2O$ | 0,15% |
| $MgO$ | 0,23% |
| $P_2O_5$ | 0,08% |
| $CaO$ | 1,07% |
| $SiO_2$ et divers | 52,35% |

2619 kg de ce minerai calcinés en (A) ont été placés en (B) dans 13 607 kg d'une liqueur chlorosulfurique $L_8$ contenant en pour cent en poids:

| | |
|---|---|
| d'HCl total | 19,98% |
| $H_2SO_4$ | 4,76% |
| d'$Al_2O_3$ | 0,83% |
| de $Fe_2O_3$ | 0,07% |
| de $CaO$ | 0,04% |

| | |
|---|---|
| $K_2O$ | 0,02% |
| $MgO$ | 0,01% |
| $P_2O_5$ | 0,08% |
| $H_2O$ | 74,21% |

Le milieu d'attaque se trouvait à une température de 105–110°C qui a été maintenue à ce niveau pendant deux heures.

La bouillie obtenue après attaque qui se trouvait encore à la température > à 105°C, était transvasée en (C) où s'opérait la séparation des phases solide $S_1$ et liquide $L_1$ contenant l'alumine solubilisée et une grande partie des impuretés initialement présentes dans le minerai.

Le gâteau $S_1$ était ensuite rincé en (D) par 5608 kg d'eau, assurant l'extraction des eauxmères d'imprégnation des inertes en donnant un résidu inerte $S_2$ et une liqueur résiduelle $L_2$, représentant une masse de 4711 kg qui était jointe à la liqueur $L_7$ pour constituer la liqueur d'attaque $L_8$.

Le résidu $S_2$ à l'état sec représentant une masse de 1626 kg, avait la composition suivante exprimée en pour cent en poids:

| | |
|---|---|
| $Al_2O_3$ | 4,74% |
| $Fe_2O_3$ | 0,31% |
| $TiO_2$ | 3,75% |
| $K_2O$ | 0,06% |
| $CaO$ | 0,12% |
| $H_2O$ | 7,13% |
| $SiO_2$ et divers | 83,89% |

La liqueur $L_1$, obtenue après attaque du minerai et séparation des inertes, représentait une masse de 13 800 kg et avait la composition suivante exprimée en pour cent en poids:

| | |
|---|---|
| $Al_2O_3$ | 7,79% |
| $Fe_2O_3$ | 0,28% |
| $Na_2O$ | 0,01% |
| $K_2O$ | 0,04% |
| $MgO$ | 0,05% |
| $P_2O_5$ | 0,01% |
| $CaO$ | 0,21% |
| $HCl$ | 18,62% |
| $SO_4H_2$ | 4,44% |
| $H_2O$ | 68,55% |

En sortant de (C), cette liqueur $L_1$ était introduite en (E) où elle subissait une concentration par évaporation en perdant 4162 kg d'eau et en donnant 9638 kg d'une liqueur $L_3$ qui avait la composition suivante exprimée en pour cent en poids:

| | |
|---|---|
| $Al_2O_3$ | 11,16% |
| $Fe_2O_3$ | 0,39% |
| $TiO_2$ | 0,01% |
| $Na_2O$ | 0,02% |
| $K_2O$ | 0,06% |
| $MgO$ | 0,07% |
| $P_2O_5$ | 0,02% |
| $CaO$ | 0,30% |
| $H_2SO_4$ | 6,36% |
| $HCl$ | 26,67% |
| $H_2O$ | 54,94% |

La liqueur $L_3$ était alors introduite en (F) où s'effectuait une reprise sulfurique par l'introduction de 8000 kg d'une liqueur $L_{14}$ qui avait la composition suivante exprimée en pour cent en poids:

| | |
|---|---|
| $Al_2O_3$ | 0,30% |
| $Fe_2O_3$ | 0,30% |
| $K_2O$ | 0,30% |
| $H_2SO_4$ libre | 60,00% |
| $H_2SO_4$ total | 61,70% |
| $H_2O$ | 37,40% |

Provenant de (F), la liqueur $L_4$ chlorosulfurique, ayant une masse de 17 638 kg, était transvasée en (G) où elle subissait une chloruration par l'introduction de 1650 kg de HCl gazeux provenant du dégazage (K).

Le produit $L_5$ de la chloruration était déplacé en (H) où s'effectuait la séparation de la liqueur chlorosulfurique $L_6$ représentant une masse de 12 655 kg et des cristaux $S_6$ de chlorure d'aluminium hexahydraté représentant une masse de 6633 kg et ayant la composition suivante exprimée en pour cent en poids:

| | |
|---|---|
| $Al_2O_3$ | 16,10% |
| $Fe_2O_3$ | 0,11% |
| $K_2O$ | 0,05% |
| $MgO$ | 0,02% |
| $CaO$ | 0,05% |
| $H_2SO_4$ total | 9,30% |
| HCl | 37,71% |
| $H_2O$ | 36,66% |

Les cristaux $S_6$ étaient rincés en (I) par 7763 kg d'une liqueur $L_{16}$ d'acide chlorhydrique de recyclage ayant une concentration de 32% en poids en donnant 8896 kg d'une liqueur chlorhydrique $L_7$ destinée à être renvoyée à l'attaque du minerai.

Après rinçage, les cristaux $S_7$ de chlorure d'aluminium hexahydraté étaient calcinés en (J), en donnant 1000 kg d'alumine pure et 4891 kg de vapeurs de HCl et d'eau $G_{15}$ qui étaient lavées et absorbées en (N) pour constituer, avec la fraction gazeuse $G_{13}$, la liqueur $L_{16}$ de rinçage du chlorure d'aluminium hexahydraté.

Comme cela à déjà été dit, la liqueur $L_6$ provenant de la séparation (H) et contenant en solution les impuretés solubilisées, représentait une masse de 12 655 kg.

Cette liqueur avait la composition suivante exprimée en pour cent en poids:

| | |
|---|---|
| $Al_2O_3$ | 0,25% |
| $Fe_2O_3$ | 0,44% |
| $TiO_2$ | 0,01% |
| $Na_2O$ | 0,02% |
| $K_2O$ | 0,21% |
| $MgO$ | 0,05% |
| $P_2O_5$ | 0,02% |
| $CaO$ | 0,21% |
| HCl | 13,58% |
| $H_2SO_4$ total | 38,97% |
| $H_2O$ | 46,24% |

A cette liqueur chlorosulfurique étaient adjointes une masse de 109 kg de HCl à 35% en poids et une masse de 324 kg de $H_2SO_4$ à 96% en poids en vue de compenser les pertes du cycle, et formant ainsi une nouvelle liqueur $L_9$ qui avait la composition suivante exprimée en pour cent en poids:

| | |
|---|---|
| $Al_2O_3$ | 0,24% |
| $Fe_2O_3$ | 0,42% |
| $TiO_2$ | 0,01% |
| $Na_2O$ | 0,02% |
| $K_2O$ | 0,21% |
| $MgO$ | 0,05% |
| $P_2O_5$ | 0,02% |
| $CaO$ | 0,20% |
| HCl | 13,42% |
| $H_2SO_4$ | 40,06% |
| $H_2O$ | 45,35% |

La liqueur $L_9$ qui représentait une masse de 13 088 kg était alors introduite en (K) où s'effectuait un dégazage en donnant 1650 kg de HCl gazeux, conduits vers (G) par $G_{10}$ et 11 438 kg d'une liqueur essentiellement sulfurique contenant encore les impuretés, liqueur à laquelle était adjointe une mase de 28 kg de $K_2SO_4$ formant ainsi la liqueur $L_{11}$ de 11 466 kg.

Cette liqueur $L_{11}$ était déplacée en (L) où s'effectuait une concentration par évaporation de 52 kg d'eau et l'élimination de la vapeur d'eau et des dernières traces d'HCl qui étaient dirigées vers l'absorption (N).

La fraction $L_{12}$ sortant de (L) représentait une masse de 8542 kg constituée par une phase solide en suspension dans la phase liquide. Introduite en (M), cette fraction $L_{12}$ donnait 542 kg d'un gâteau $S_{14}$ et 8000 kg d'une liqueur sulfurique $L_{14}$.

Le gâteau $S_{14}$ était formé de sulfates doubles d'impuretés à éliminer, précipités lors de l'opération d'évaporation en (L), et avait la composition suivante exprimée en pour cent en poids:

| | |
|---|---|
| $Al_2O_3$ | 1,29% |
| $Fe_2O_3$ | 5,72% |
| $TiO_2$ | 0,18% |
| $Na_2O$ | 0,37% |
| $K_2O$ | 3,32% |
| $MgO$ | 1,11% |
| $P_2O_5$ | 0,37% |
| $CaO$ | 4,80% |
| $H_2SO_4$ libre | 30,07% |
| $H_2SO_4$ total | 59,59% |
| $H_2O$ | 23,25% |

La liqueur sulfurique $S_{14}$ était recyclée en (F) pour être jointe à la liqueur $L_3$.

L'alumine obtenue était extrêmement pure et son analyse a montré que les rares impuretés présentes, l'étaient en des quantités exprimées en ppm (parties par million), inférieures à celles généralement mesurées dans les alumines obtenues par les grands procédés industriels.

Fe < 200 ppm
Si <  20 ppm
Ti <  10 ppm
K  < 100 ppm
Na <  20 ppm

## Revendications

1. Procédé d'obtention d'une alumine pure à partir d'un minerai alumineux calciné contenant des impuretés, comportant l'attaque chlorosulfurique et à chaud dudit minerai, la séparation du résidu d'attaque et de la liqueur-mère après attaque, le lavage du résidu d'attaque, la concentration de la liqueur-mère après attaque, la précipitation de $AlCl_3 \cdot 6H_2O$ par chloruration de la liqueur-mère concentrée, la calcination du chlorure d'aluminium hydraté et le recyclage des effluents, caractérisé en ce que l'attaque du minerai se fait au moyen d'une liqueur de recyclage formée d'un mélange d'HCl et de $H_2SO_4$ et contenant plus d'HCl que de $H_2SO_4$, la quantité de HCl étant inférieure à 50% en poids, en ce que la liqueur-mère provenant de l'attaque est concentrée jusqu'à la limite de solubilité du chlorure d'aluminium hexahydraté, en ce que la liqueur-mère chlorosulfurique concentrée est mélangée à une liqueur sulfurique de recyclage, puis soumise à une chloruration par introduction d'HCl gazeux recyclé, en vue de précipiter la quasi-totalité de $AlCl_3 \cdot 6H_2O$, en ce que, après séparation du précipité, la liqueur chlorosulfurique contenant les impuretés est dégazée pour recycler HCl gaz à la précipitation de $AlCl_3 \cdot 6H_2O$ et récupérer une liqueur sulfurique d'impuretés qui est concentrée en vue de précipiter de ladite liqueur du sulfate ferri-potassique et les autres sulfates d'impuretés correspondant à la quantité des impuretés provenant du minerai et à recycler la liqueur sulfurique débarrassée des impuretés vers la liqueur-mère chlorosulfurique provenant de l'attaque.

2. Procédé d'obtention d'une alumine pure selon la revendication 1, caractérisé en ce qu'on introduit un sel de potassium dans la liqueur sulfurique d'impuretés résultant de la séparation du précipité de $AlCl_3 \cdot 6H_2O$.

3. Procédé d'obtention d'alumine pure selon la revendication 2, caractérisé en ce que le sel de potassium est un composé recyclé.

4. Procédé selon revendication 1, caractérisé en ce que la liqueur d'attaque comporte, en pour cent en poids, 20% de HCl et 5% de $H_2SO_4$.

5. Procédé selon les revendications 1 et 4, caractérisé en ce que l'attaque s'effectue à une température proche de l'ébullition.

6. Procédé selon la revendication 1, caractérisé en ce que la liqueur-mère chlorosulfurique provenant de l'attaque, puis concentrée, est mélangée à une liqueur sulfurique de recyclage contenant 40 à 65% en poids de $H_2SO_4$ libre.

7. Procédé selon la revendication 1, caractérisé en ce que les sulfates ferri-potassique et d'impuretés sont calcinés, le $SO_2$ obtenu étant trans-

formé en $H_2SO_4$ qui est recyclé dans le circuit de traitement.

## Claims

1. A process for producing a pure alumina from a calcined aluminium ore containing impurities, comprising chlorosulphuric attack on said ore, in a hot condition, separation of the attack residue and the mother liquor after attack, washing of the attack residue, concentration of the mother liquor after attack, precipitation of $AlCl_3 \cdot 6H_2O$ by chloridation of the concentrated mother liquor, calcination of the hydrated aluminium chloride and recycling of the effluents, characterised in that the ore attack operation is effected by means of a recycling liquor formed by a mixture of HCl and $H_2SO_4$ and containing more HCl than $H_2SO_4$, the amount of HCl being less than 50% by weight, that the mother liquor produced by the attack operation is concentrated to the limit of solubility of the hexahydrated aluminium chloride, that the concentrated chlorosulphuric mother liquor is mixed with a recycling sulphuric liquor and then subjected to chloridation by the introduction of recycled gaseous HCl for precipitating virtually all the $AlCl_3 \cdot 6H_2O$, that, after separation of the precipitate, the chlorosulphuric liquor containing the impurities is degassed to recycle HCl gas to the step of precipitating $AlCl_3 \cdot 6H_2O$ and recover a sulphuric impurities liquor which is concentrated for precipitating from said liquor ferric potassium sulphate and the other sulphates of impurities corresponding to the amount of impurities originating from the ore and to recycle the sulphuric liquor from which the impurities have been removed to the chlorosulphuric mother liquor originating from the attack operation.

2. A process for producing a pure alumina according to claim 1 characterised in that a potassium salt is introduced into the sulphuric impurities liquor resulting from separation of the precipitate of $AlCl_3 \cdot 6H_2O$.

3. A process for producing pure alumina according to claim 2 characterised in that the potassium salt is a recycled compound.

4. A process according to claim 1 characterised in that the attack liquor comprises, in percent by weight, 20% of HCl and 5% of $H_2SO_4$.

5. A process according to claims 1 and 4 characterised in that the attack operation is carried out a temperature close to boiling.

6. A process according to claim 1 characterised in that the chlorosulphuric mother liquor originating from the attack operation, which is then concentrated, is mixed with a recycled sulphuric liquor containing from 40 to 65% by weight of free $H_2SO_4$.

7. A process according to claim 1 characterised in that the ferric potassium sulphate and impurities sulphates are calcined, the $SO_2$ produced being converted into $H_2SO_4$ which is recycled to the treatment circuit.

## Patentansprüche

1. Verfahren zum Erhalten eines reinen Aluminiumoxids aus einem kalzinierten, Verunreinigungen enthaltenden Aluminiummineral, das den chlorschwefelsauren Aufschluss des Minerals in der Wärme, die Trennung des Aufschlussrückstandes und der Mutterlauge nach Aufschluss, das Waschen des Aufschlussrückstandes, die Konzentration der Mutterlauge nach Aufschluss, die Ausfällung von $AlCl_3 \cdot 6\,H_2O$ durch Chlorierung der konzentrierten Mutterlauge, die Kalzinierung des Aluminiumchloridhydrats und die Rückführung der Abflüsse umfasst, dadurch gekennzeichnet, dass der Aufschluss des Minerals mittels einer aus einem Gemisch von HCl und $H_2SO_4$ gebildeten und mehr HCl als $H_2SO_4$ enthaltenden Rückführflüssigkeit erfolgt, deren HCl-Menge unter 50 Gew.-% ist, dass die vom Aufschluss stammende Mutterlauge bis zur Löslichkeitsgrenze des Aluminiumchloridhexahydrats konzentriert wird, dass die konzentrierte chlorschwefelsaure Mutterlauge mit einer schwefelsauren Rückführflüssigkeit gemischt und dann einer Chlorierung durch Einführen von rückgeführtem gasförmigen HCl unterworfen wird, um fast die Gesamtmenge an $AlCl_3 \cdot 6\,H_2O$ auszufällen, dass nach Abtrennung des Niederschlags die die Verunreinigungen enthaltende chlorschwefelsaure Flüssigkeit entgast wird, um HCl-Gas zur Ausfällung von $AlCl_3 \cdot 6\,H_2O$ rückzuführen und eine schwefelsaure Verunreinigungsflüssigkeit zu erfassen, die konzentriert wird, um aus dieser Flüssigkeit Ferrikaliumsulfat und die anderen Sulfate von Verunreinigungen entsprechend der aus dem Mineral stammenden Menge der Verunreinigungen auszufällen und die von den Verunreinigungen befreite schwefelsaure Flüssigkeit zu der vom Aufschluss stammenden chlorschwefelsauren Mutterlauge zurückzuführen.

2. Verfahren zum Erhalten reinen Aluminiumoxids nach dem Anspruch 1, dadurch gekennzeichnet, dass man ein Kaliumsalz in die sich durch die Abtrennung des $AlCl_3 \cdot 6\,H_2O$-Niederschlags ergebende schwefelsaure Verunreinigungsflüssigkeit einführt.

3. Verfahren zum Erhalten reinen Aluminiumoxids nach dem Anspruch 2, dadurch gekennzeichnet, dass das Kaliumsalz eine rückläufige Verbindung ist.

4. Verfahren nach Anspruch 1, dadurch gekennzeichnet, dass die Aufschlussflüssigkeit in Gew.-% 20% HCl und 5% $H_2SO_4$ enthält.

5. Verfahren nach den Ansprüchen 1 und 4, dadurch gekennzeichnet, dass der Aufschluss bei einer dem Sieden nahen Temperatur erfolgt.

6. Verfahren nach dem Anspruch 1, dadurch gekennzeichnet, dass die vom Aufschluss stammende, danach konzentrierte chlorschwefelsaure Mutterlauge mit einer 40 bis 65 Gew.-% freie $H_2SO_4$ enthaltenden, schwefelsauren Rückführlösung vermischt wird.

7. Verfahren nach dem Anspruch 1, dadurch gekennzeichnet, dass die Ferrikalium- und Verunreinigungssulfate kalziniert werden, wobei das erhaltende $SO_2$ in $H_2SO_4$ umgewandelt wird, die in den Behandlungskreislauf rückgeführt wird.